# FASCICULE DE BREVET EUROPEEN

(11) **EP 2 104 243 B1**
(45) Date de publication et mention de la délivrance du brevet: **04.05.2011**
(21) Numéro de dépôt: 09154703.4
(22) Date de dépôt: 10.03.2009
(51) Int. Cl.: H04B 7/185

(54) **Réseau de télécommunication**
Funknetz
Telecommunications network

(30) Priorité: 21.03.2008 FR 0851885
(43) Date de publication de la demande: 23.09.2009
(73) Titulaire: Eutelsat SA, 75015 Paris (FR)
(72) Inventeur: Fenech, Hector, 92130, ISSY LES MOULINEAUX (FR); Lance, Emmanuel, 92110, CLICHY (FR)
(74) Mandataire: Lebkiri, Alexandre

(56) Documents cités:
- WO-A-00/07306
- WO-A-2004/002016
- US-A1- 2002 052 180

## Description

La présente invention concerne un réseau de télécommunication pour l'établissement de liaisons radiofréquences entre des stations terrestres et des terminaux terrestres via un satellite de télécommunication multifaisceaux. Ce type de satellite permet l'utilisation de plusieurs faisceaux d'antennes à bord du satellite pour couvrir des zones géographiques contiguës ou cellules, au lieu d'un seul faisceau large.

De tels satellites multifaisceaux permettent d'établir plusieurs liaisons radiofréquences occupant une même bande de fréquence sur des faisceaux différents.

Dans le cas de système de télécommunication satellitaire large bande (« broadband » en anglais) à haut débit, le satellite est utilisé de façon bidirectionnelle, c'est-à-dire à la fois pour :
- relayer des données émises par une station terrestre principale (reliée au réseau terrestre) vers une pluralité de terminaux terrestres : cette première liaison de type point à multipoints constitue la voie aller (« forward link » en anglais) ;
- relayer vers la station terrestre principale les données émises par les terminaux terrestres : cette deuxième liaison, de type multipoints à point, constitue la voie retour (« return link » en anglais).

On notera qu'un service de radiodiffusion par satellite peut être considéré comme équivalent à la voie aller d'un système bidirectionnel tel que décrit ci-dessus.

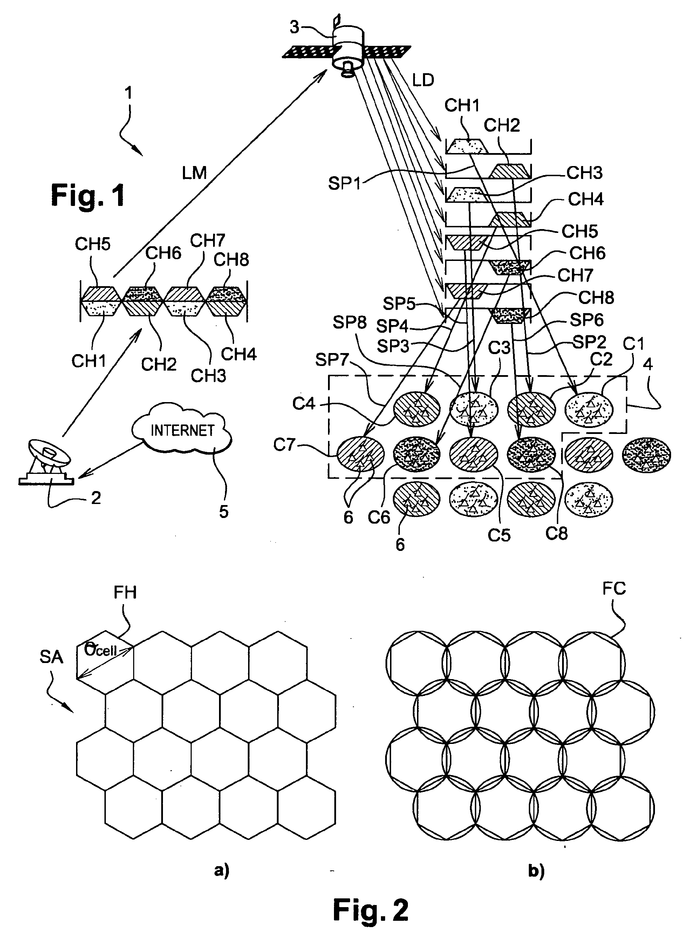

Un exemple de voie aller dans une configuration de réseau de télécommunication multifaisceaux est illustré en figure 1.

Des signaux sont envoyés vers un satellite multifaisceaux 3 sur une liaison montante LM par une station terrestre principale 2 (également appelée station centrale) telle qu'une passerelle de communication terrestre (« gateway » en anglais) reliée à une dorsale Internet 5. La station terrestre principale contrôle le réseau par le biais d'un système de gestion du réseau qui permet à l'exploitant de surveiller et de contrôler tous les composants du réseau. Les signaux envoyés par la station terrestre principale sont ensuite traités au niveau du satellite 3 qui les amplifie, les transpose à une fréquence généralement inférieure puis les retransmet à partir de la ou des antennes satellitaires sur une liaison descendante LD sous la forme d'une pluralité de faisceaux ou spots formant des zones de couvertures élémentaires ou cellules C1 à C8 dans lesquelles sont situés des terminaux terrestres 6. Chaque cellule C1 à C8 est associée à un faisceau SP1 à SP8. On notera que, dans le cas de la configuration 1, les huit cellules C1 à C8 associées respectivement aux huit faisceaux SP1 à SP8 forment un groupe de cellules servies par la même station terrestre 2. Dans la pratique, le réseau 1 est formé par une pluralité de stations terrestres principales reliées entre-elles via un réseau terrestre (réseau Internet par exemple). La voie retour des terminaux terrestres 6 vers la station terrestre 2 fonctionne de manière identique avec une direction de communication inverse.

La coordination des fréquences entre opérateurs se fait dans le cadre d'une règlementation édictée par l'Union Internationale des Télécommunications (IUT) : ainsi, à titre d'exemple, la bande Ka pour la région 1 (Europe, Afrique, Moyen-Orient) est définie dans le tableau 1 ci-dessous :

**Tableau 1.**

| | | |
|---|---|---|
| Voie aller | Liaison montante (de la station terrestre) | 27.5 GHz à 29.5 GHz |
| | Liaison descendante (vers les terminaux terrestres) | 19.7 GHz à 20.2 GHz |
| Voie retour | Liaison montante (des terminaux terrestres) | 29.5 GHz à 30.0 GHz |
| | Liaison descendante (vers la station terrestre) | 17.7 GHz à 19.7 GHz |

On constate que les spectres de la bande Ka en liaison montante sont adjacents (i.e. les intervalles [27.5 ; 29.5] et [29.5 ; 30.0] ne présentent pas de discontinuité). Il en va de même pour les spectres de la bande Ka en liaison descendante (i.e. les intervalles [17.7 ; 19.7] et [19.7 ; 20.2] ne présentent pas de discontinuité).

Étant donné que le gain d'une antenne est inversement proportionnel à l'ouverture du faisceau, il est nécessaire d'utiliser des antennes multifaisceaux pour couvrir une zone étendue avec un gain homogène et élevé. Plus le nombre de faisceaux sera grand, plus petite sera la zone de service de chaque faisceau. Ainsi, le gain sur chaque faisceau et donc le gain sur la zone de service à couvrir sera augmenté. Comme nous l'avons mentionné plus haut, une zone de service à couvrir est formée par une pluralité de cellules contigües (zones de couvertures élémentaires), un faisceau étant associé à chaque cellule. Une zone de couverture multifaisceaux homogène SA est représentée en figure 2a), chaque cellule étant représentée par un hexagone FH de sorte que la zone de couverture est composée d'une pluralité d'hexagones FH dans laquelle θ*_{cell}* est la dimension externe de la cellule exprimée par l'angle du satellite associé à la couverture. Toutefois, le faisceau d'antenne associé à chaque cellule n'est pas capable de produire une forme hexagonale, une bonne approximation consistant à considérer une pluralité de faisceaux circulaires FC tels que représentés en figure 2 b). L'association d'un faisceau avec une cellule se fait en prenant en compte les meilleures performances du satellite pour ledit faisceau, notamment en termes de PIRE (Puissance Isotrope Rayonnée Equivalente) et de facteur de mérite G/T (rapport gain sur température de bruit) : une cellule est déterminée comme la partie de la zone de service associée au faisceau offrant le gain le plus élevé sur cette zone parmi tous les faisceaux du satellite.

La configuration 1 telle que représentée en figure 1 utilise une technique dite de réutilisation des fréquences : cette technique permet d'utiliser une même plage de fréquences plusieurs fois dans le même système satellitaire afin d'accroître la capacité totale du système sans augmenter la bande passante attribuée.

On connaît des schémas de réutilisation de fréquences, dits schémas de couleur, faisant correspondre une couleur à chacun des faisceaux du satellite. Ces schémas de couleur sont utilisés pour décrire l'attribution d'une pluralité de bandes de fréquences aux faisceaux du satellite en vue de transmissions radiofréquences à réaliser dans chacun de ces faisceaux. Dans ces schémas, chaque couleur correspond à une de ces bandes de fréquences.

Ces satellites multifaisceaux permettent par ailleurs d'émettre (et de recevoir) des transmissions polarisées : la polarisation peut être linéaire (dans ce cas les deux sens de polarisation sont respectivement horizontal et vertical) ou circulaire (dans ce cas les deux sens de polarisation sont respectivement circulaire gauche ou circulaire droit). On notera que dans l'exemple de la figure 1, la liaison montante partant de la station terrestre principale 2 utilise deux polarisations avec quatre canaux pour chaque polarisation, respectivement Ch1 à Ch4 pour la première polarisation et Ch5 à Ch8 pour la deuxième polarisation : l'utilisation de deux polarisations permet de réduire le nombre total de stations terrestres principales. Les huit canaux Ch1 à Ch8, après traitement par la charge utile du satellite 3 formeront les huit faisceaux SP1 à SP8 (un canal étant associé à un faisceau dans cet exemple).

Selon un schéma à quatre couleurs (rouge, jaune, bleu, vert) avec un spectre de fréquence de 500 MHz pour chaque polarisation, les transmissions étant polarisées dans l'un des deux sens de polarisation circulaire droit ou circulaire gauche, chaque couleur est associée à une bande de 250 MHz et un sens de polarisation.

Nous prendrons dans toute la suite de la description la convention suivante :
- la couleur rouge est représentée par des traits hachurés vers la droite ;
- la couleur jaune est représentée par des points denses ;
- la couleur bleue est représentée par des traits hachurés vers la gauche ;
- la couleur verte est représentée par des points dispersés.

Une couleur est ainsi associée à chaque faisceau du satellite (et donc une cellule) de sorte que les faisceaux d'une même « couleur » soient non adjacents : les cellules contigües correspondent donc à des couleurs différentes.

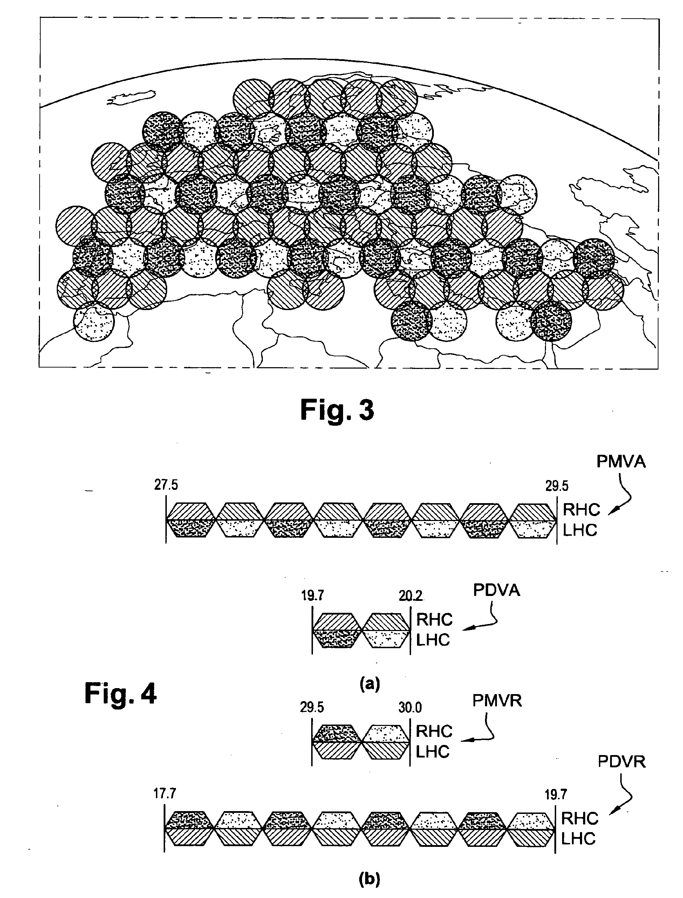

Un exemple de schéma à quatre couleurs pour la couverture de l'Europe est représenté en figure 3. Dans ce cas, 80 cellules sont nécessaires pour couvrir l'Europe.

Ce type de schéma est applicable aussi bien en liaison montante qu'en liaison descendante. Au niveau du satellite, la création d'un faisceau se fait à partir d'un cornet rayonnant vers un réflecteur. Un réflecteur peut être associé à une couleur de sorte qu'une couverture à quatre couleurs est assurée par quatre réflecteurs. En d'autres termes, la génération de 16 faisceaux de chaque station terrestre principale peut se faire via l'utilisation de quatre antennes (une par couleur) ayant chacune un réflecteur, quatre cornets étant associés à chaque réflecteur.

La figure 4 illustre un plan de fréquences décomposé en un plan de fréquences de liaison montante PMVA sur la voie aller, un plan de fréquences de liaison descendante PDVA sur la voie aller, un plan de fréquences de liaison montante PMVR sur la voie retour et un plan de fréquences de liaison descendante PDVR sur la voie retour. Les notations RHC et LHC désignent respectivement les sens circulaires droit et gauche de polarisation.

Le plan PMVA correspondant à la liaison montante sur la voie aller (de la station terrestre principale au satellite) dispose de 2 GHz (de 27.5 à 29.5 GHz) de spectre disponible en fréquence de sorte que 16 canaux de 250 MHz de bande passante sont générés par une station terrestre (8 canaux pour chaque polarisation). Ces 16 canaux, après traitement par la charge utile du satellite formeront 16 faisceaux. L'hypothèse faite ici consiste à considérer que tout le spectre de 2 GHz est utilisé : on notera toutefois qu'il est également possible, notamment pour des raisons opérationnelles, d'utiliser seulement une partie du spectre et de générer moins de canaux. Dans l'exemple ci-dessus, 16 faisceaux (et donc 16 cellules) sont générés à partir de deux signaux multiplexant les 8 canaux (un signal multiplexé par polarisation) générés par une station terrestre principale. Chaque signal multiplexé correspondant à une polarisation est ensuite traité au niveau du répéteur du satellite de façon à fournir 8 faisceaux ; chacun de ces huit faisceaux est associé à un intervalle de fréquence parmi les deux intervalles de fréquences [19.7 ; 19.95] et [19.95 ; 20.2] et à une polarisation RHC ou LHC tels que représentés sur le plan de fréquences de liaison descendante PDVA.

Le plan PDVR correspondant à la liaison descendante sur la voie retour (du satellite à la station terrestre principale) dispose de 2 GHz (de 17.7 à 19.7 GHz) de spectre disponible en fréquence de sorte que 16 faisceaux de 250 MHz de bande passante (associé à un intervalle de fréquence parmi les deux intervalles de fréquences [29.5 ; 29.75] et [29.75 ; 30.0] et à une polarisation RHC ou LHC tels que représentés sur le plan de fréquences de liaison descendante PMVR) issus des cellules sont multiplexés au niveau du satellite en deux signaux (correspondant à chaque polarisation) pour être renvoyés vers la station terrestre principale (8 canaux pour chaque polarisation). Nous faisons toujours l'hypothèse que l'ensemble du spectre de 2 GHz est utilisé. Ainsi, dans le cas de l'Europe avec un spectre de 2 GHz utilisé, on a un nombre N_{c} de cellules égal à 80 et un nombre de stations terrestres actives N_{GWactive} égal à 5 (soit le nombre 80 de cellules divisé par le nombre 16 de faisceaux). On notera qu'il se peut qu'une partie de la bande ne soit pas utilisable, par exemple la partie allant de 17.7 à 18.45 GHz en voie retour et la partie allant de 27.5 à 28.25 GHz en voie aller : dans ce cas, le nombre de canaux Ns par polarisation est égal à 5 : dès lors, le nombre de cellules étant toujours égal à 80 pour l'Europe, le nombre de stations terrestres actives N_{GWactive} devient égal à 5. En tout état de cause, le nombre de stations terrestres principales N_{GWactive} est toujours inférieur au nombre N_{c} de cellules de la zone de couverture.

Pour la voie aller, chaque faisceau est associé à une des quatre couleurs suivantes :
- une couleur rouge correspondant à une première bande de 250 MHz (partie inférieure du spectre disponible de 500 MHz) et au sens de polarisation circulaire droit ;
- une couleur jaune correspondant à la même première bande de 250 MHz et au sens de polarisation circulaire gauche ;
- une couleur bleue correspondant à une deuxième bande de 250 MHz (partie supérieure du spectre disponible de 500 MHz) et au sens de polarisation circulaire droit ;
- une couleur verte correspondant à la même deuxième bande de 250 MHz et au sens de polarisation circulaire gauche.

Les quatre faisceaux adjacents d'un même motif sont chacun associés à une couleur différente.

Sur la voie retour, les polarisations sont inversées de sorte que les couleurs rouge et jaune ont une polarisation circulaire gauche et les couleurs bleue et verte ont une polarisation circulaire droite. Les terminaux terrestres émettent et reçoivent suivant une polarisation inverse de sorte qu'on peut aisément séparer les signaux de liaison montante des signaux de liaisons descendantes : une telle configuration permet d'utiliser des terminaux moins coûteux.

La charge utile du satellite désigne la partie qui lui permet de remplir la mission pour laquelle il a été conçu c'est-à-dire pour un satellite de télécommunication 3 tel que celui représenté en figure 1, d'assurer la réception, le traitement (conversion de fréquence, filtrage, amplification) et la réémission des signaux de télécommunication issus de la station terrestre 2. La charge utile comprend essentiellement les antennes du satellite et les répéteurs (et pas les équipements de contrôle, de propulsion ou d'alimentation électrique qui appartiennent à la plate-forme du satellite).

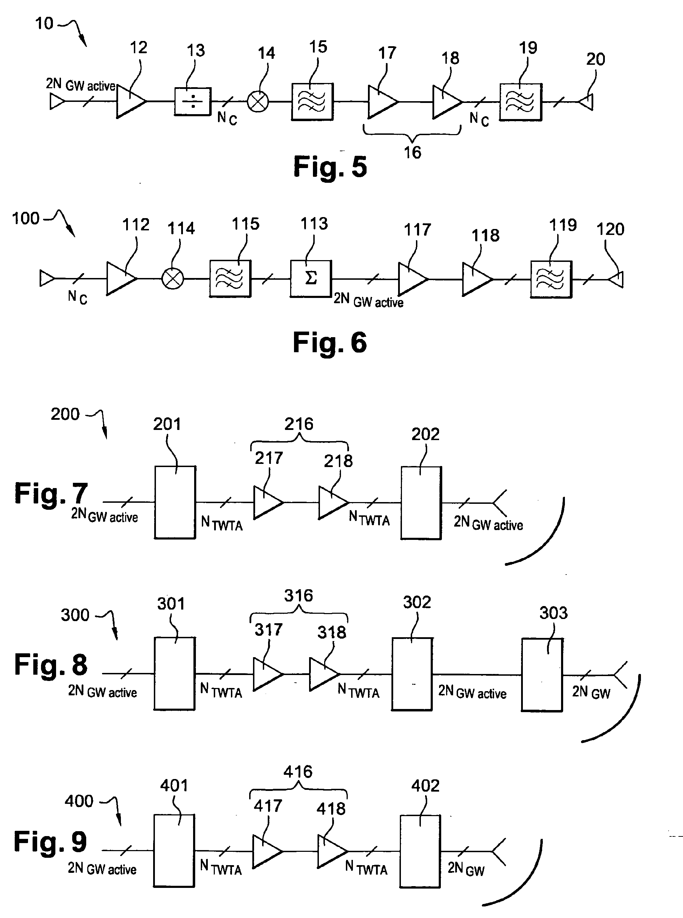

La figure 5 représente de façon connue un bloc diagramme fonctionnel d'une architecture de charge utile 10 en voie aller (des stations terrestres principales vers les cellules incluant les terminaux terrestres) avec émission multifaisceaux sur la liaison descendante.

Après réception et sélection de la polarisation, 2N_{GWactive} signaux multiplexés (dans l'exemple cité plus haut, N_{Gwactive} signaux de 8 canaux pour chacune des deux polarisations) reçus de N_{GWactive} stations terrestres principales (ou passerelle de communication) sont chacun amplifiés par un amplificateur faible bruit 12 LNA (« Low Noise Amplifier »). Chaque signal est ensuite séparé en N_{c} canaux de liaison montante par un dispositif de séparation des signaux (démultiplexeur) 13. Les N_{c} canaux de liaison montante sont ensuite translatés en fréquence par un circuit convertisseur de fréquence 14 généralement formé par un oscillateur local et filtrés par un filtre de réception 15 (du type filtre passe bande) de façon à former N_{c} canaux en accord avec le plan de fréquence de la liaison descendante sur la voie aller (PDVA). Les N_{c} canaux à fréquence translatée sont amplifiés au travers d'un amplificateur de puissance 16 HPA (« High Power Amplifier » en anglais) généralement formé par un amplificateur de canal 17 CAMP (« Chanel AMPlifier » en anglais) et un amplificateur à tube à ondes progressives 18 TWTA (« Traveling Wave Tube Amplifier » en anglais) formant N_{c} signaux de faisceau de liaison descendante. Chacun des N_{c} signaux est ensuite filtré au travers d'un filtre passe bande d'émission 19 puis envoyé sur un dispositif rayonnant 20 tel qu'un cornet rayonnant vers un réflecteur pour la formation d'un faisceau. Selon cette configuration fonctionnelle, la charge utile 10 comporte :
- 2N_{GWactive} amplificateurs faible bruit 12 LNA ;
- 2N_{GWactive} dispositifs diviseurs de signal 13 ;
- N_{c} circuits convertisseur de fréquence 14 ;
- N_{c} filtres de réception 15 ;
- N_{c} amplificateurs de puissance 16 HPA ;
- N_{c} filtres passe bande d'émission 19.

La figure 6 représente de façon connue un bloc diagramme fonctionnel d'une architecture de charge utile 100 en voie retour (des cellules incluant les terminaux terrestres vers les stations terrestres principales) avec émission multifaisceaux sur la liaison montante.

N_{c} signaux reçus de N_{c} cellules comportant les terminaux utilisateurs sont chacun amplifiés par un amplificateur faible bruit 112 LNA (« Low Noise Amplifier »). Chaque signal est ensuite transposé en fréquence par un circuit convertisseur de fréquence 114 généralement formé par un oscillateur local et filtré par un filtre de réception 115 (du type filtre passe bande) de façon à former N_{c} canaux en accord avec le plan de fréquence de la liaison descendante sur la voie retour (PDVR). Les canaux destinés à une même station terrestre principale (pour une même polarisation) sont ensuite regroupés pour former un signal multiplexé via un multiplexeur 113 (à N_{c} entrées et 2N_{Gwactive} sorties) : la structure de ce signal multiplexé est identique à celle d'un signal émis par une station terrestre principale vers le satellite sur la liaison montante en voie aller. On a donc 2N_{Gwactive} signaux en sortie du multiplexeur 113. Chacun des 2N_{GWactive} signaux est amplifié au travers d'un amplificateur de puissance 116 HPA généralement formé par un amplificateur de canal 117 CAMP et un amplificateur à tube à ondes progressives 118 TWTA formant 2N_{GWactive} signaux de liaison descendante en voie retour. Chacun des 2N_{GWactive} signaux de liaison descendante en voie retour est ensuite filtré au travers d'un filtre passe bande d'émission 1-19 puis envoyé sur un dispositif rayonnant 120 tel qu'un cornet rayonnant vers un réflecteur pour la formation des 2N_{GWactive} signaux à destination des N_{GWactive} stations terrestres principales. Selon cette configuration fonctionnelle, la charge utile 100 comporte :
- N_{c} amplificateurs faible bruit 112 LNA ;
- N_{c} circuits convertisseur de fréquence 114 ;
- N_{c} filtres de réception 115 ;
- Un dispositif multiplexeur 113 à N_{c} entrées et 2N_{GWactive} sorties ;
- 2N_{GWactive} amplificateurs de puissance 116 HPA ;
- 2N_{GWactive} filtres passe bande d'émission 119.

On notera que les amplificateurs de canal 17 et/ou 117 sont généralement des amplificateurs à commande de gain qui permettent de régler le niveau de puissance des signaux en entrée des tubes à ondes progressives 18 et/ou 118. Les tubes 18 et /ou 118 peuvent être remplacés par des amplificateurs de puissance à état solide SSPA (« Solid State Power Amplifier » en anglais). Il est également possible d'utiliser des architectures plus sophistiquées comprenant des dispositifs du type MPA (« Multiport Amplifier » en anglais) offrant davantage de flexibilité.

Les charges utiles 10 et 100 telles que présentées ci-dessus peuvent cependant poser quelques difficultés, notamment en cas de pannes des tubes TWTA.

Une solution connue à ce problème consiste à utiliser des tubes redondants. Une telle configuration est illustrée en figure 7. La figure 7 représente schématiquement la partie 200 d'une charge utile en voie retour située entre le multiplexeur et le filtre d'émission et incluant des CAMP et des tubes TWTA redondants.

Comme expliqué plus haut, chacun des 2N_{GWactive} signaux est amplifié au travers d'un amplificateur de puissance 216 HPA généralement formé par un amplificateur de canal 217 CAMP et un amplificateur à tube à ondes progressives 218 TWTA formant 2N_{GWactive} signaux de liaison descendante en voie retour. La différence avec la figure 6 réside dans le fait que la charge utile 200 inclut N-WTA amplificateurs de puissance 216 HPA formés par N_{TWTA} amplificateurs de canal 217 CAMP et N_{TWTA} amplificateurs à tube à ondes progressives TWTA, N_{TWTA} étant strictement supérieur à 2N_{GWactive}.

La charge utile 200 comporte des premiers moyens 201 de sélection recevant en entrées les 2N_{Gwactive} signaux à amplifier et sélectionnant les 2N_{GWactive} amplificateurs de puissance 217 parmi les N_{TWTA} présents qui réaliseront l'amplification. En cas de panne d'un amplificateur de puissance (panne d'un tube par exemple), il est alors possible d'utiliser un autre amplificateur en commutant le signal sur cet amplificateur. La charge utile 200 comporte en outre des deuxièmes moyens 202 de sélection recevant en entrées les sorties des N_{TWTA} amplificateurs de puissance pour produire en sortie les 2N_{Gwactive} signaux amplifiés de liaison descendante en voie retour qui seront ensuite filtrés au travers d'un filtre passe bande de sortie puis envoyés sur un cornet rayonnant vers un réflecteur pour la formation des 2N_{GWactive} signaux à destination des N_{GWactive} stations terrestres principales. Une telle configuration permet de supporter N_{TWTA}-2N_{Gwactive} défaillances d'amplificateurs. On notera que le même type de configuration peut être prévu en voie aller avec une redondance des amplificateurs à faible bruit LNA.

Une telle configuration peut cependant également présenter certaines difficultés. En effet, il se peut également qu'une station terrestre principale subisse une panne ; dans un tel cas, une solution connue consiste à introduire une redondance dans les composants utilisés dans la station terrestre principale de façon à permettre de commuter sur un composant redondant en cas de panne d'un composant d'une des stations terrestres principales. Une telle redondance entraîne bien entendu un surcoût important.

Par ailleurs, il est également possible qu'une station terrestre soit momentanément indisponible ou inutilisable (par exemple, en cas d'intempérie rendant le trafic de données difficile ou en cas de maintenance de la station terrestre) sans pour autant être défaillante.

Le document WO2004/00201 décrit un système avec changement de « gateway » dans le cas d'une dégradation d'une liaison utilisateur/ « gateway » et propose à cet effet de mettre en oeuvre un algorithme pour la détection de la dégradation et le transfert des utilisateurs liés à la gateway pour laquelle la liaison est dégradée vers une autre gateway.

Dans ce contexte, la présente invention vise à fournir un réseau de télécommunication pour l'établissement de liaisons radiofréquences entre des stations terrestres principales et des terminaux terrestres via un satellite de télécommunication multifaisceaux, ledit réseau permettant de s'affranchir des problèmes précités.

A cette fin, l'invention propose un réseau de télécommunication pour l'établissement de liaisons radiofréquences entre des stations terrestres principales et des terminaux terrestres via un satellite de télécommunication à plusieurs faisceaux, dit satellite multifaisceaux, ledit réseau comportant :
- un satellite multifaisceaux incluant une charge utile pour la réception, le traitement et la réémission des signaux de télécommunication reçus par ledit satellite,
- une zone de services composée d'une pluralité de zones de couvertures élémentaires, dites cellules, chaque cellule comportant une pluralité de terminaux terrestres,
- une pluralité N_{GWactive} de stations terrestres principales actives reliées entre elles par un réseau terrestre, N_{GWactive} étant un nombre entier, ledit satellite relayant les signaux émis par lesdites N_{GWactive} stations terrestres principales actives vers lesdites cellules,
   ledit réseau étant caractérisé en ce qu'il comporte N_{GW} stations terrestres principales, N_{GW} étant un nombre entier strictement supérieur au nombre N_{GWactive} de stations terrestres principales actives, lesdites N_{GW} stations terrestres principales étant reliées entre elles par ledit réseau terrestre et incluant lesdites N_{Gwactive} stations terrestres principales actives de sorte que N_{GW}-N_{GWactive} stations terrestres principales sont non actives.

On entend par station terrestre principale (« gateway » en anglais) toute station centrale comportant une passerelle de communication terrestre reliée à une dorsale Internet. La station terrestre principale envoie sur une voie aller des signaux qui sont ensuite traités au niveau du satellite qui les amplifie, les transpose à une fréquence différente (généralement inférieure) puis les retransmet à partir de la ou des antennes satellitaires sur une liaison descendante sous la forme d'une pluralité de faisceaux ou spots formant des zones de couvertures élémentaires ou cellules dans lesquelles sont situés des terminaux terrestres.

On entend par station terrestre principale active une station terrestre qui participe effectivement à la diffusion et à la réception des signaux vers et des cellules de terminaux terrestres utilisateurs. A l'inverse, une station terrestre principale non active ne participe pas au trafic de données ; en revanche, l'ensemble des stations terrestres actives et inactives sont reliées entre elles via un réseau terrestre tel qu'un réseau de type Internet.

Grâce à l'invention, on utilise au moins une station terrestre additionnelle (N_{GW} - N_{GWactive} ≥1) non activée en plus du nombre total de stations terrestres actives N_{GWactive} nécessaires à la couverture de la zone de service. Les stations N_{GW} terrestres principales sont localisées dans des endroits différents et les moyens de sélection de la charge utile à bord du satellite permettent de commuter d'une station terrestre défaillante ou momentanément indisponible à une station terrestre parmi les N_{GW} - N_{GWactive} stations terrestres prévues à cet effet. Une telle configuration est particulièrement intéressante non seulement en cas de panne d'une station terrestre principale mais aussi et surtout opérationnellement en cas d'indisponibilité momentanée d'une station terrestre principale, par exemple en cas de mauvais temps (pluie entraînant une altération des signaux radiofréquences) ou en cas de maintenance planifiée.

Avantageusement, ledit réseau est un réseau bidirectionnel de sorte que ledit satellite relaye :
- les signaux émis par lesdites N_{GWactive} stations terrestres principales actives vers lesdites cellules, cette première liaison formant la voie aller,
- les signaux émis par lesdites cellules vers lesdites N_{GWactive} stations terrestres principales actives, cette deuxième liaison formant la voie retour.

La présente invention a également pour objet une charge utile de voie retour d'un satellite de télécommunication multifaisceaux utilisé dans un réseau selon l'invention, ladite charge utile comportant des moyens pour rerouter un signal multiplexé à partir d'une pluralité de signaux émis par lesdites cellules, ledit signal étant initialement destiné à une desdites N_{GWactive} stations terrestres principales actives devenue indisponible, vers une desdites N_{GWactive} stations terrestres principales dont une nouvellement activée sélectionnée parmi les N_{GW}-N_{GWactive} stations terrestres initialement non activées.

La charge utile selon l'invention peut également présenter une ou plusieurs des caractéristiques ci-dessous, considérées individuellement ou selon toutes les combinaisons techniquement possibles :
De manière particulièrement avantageuse, la charge utile comporte des moyens pour amplifier ledit signal multiplexé et rerouté, l'opération de reroutage se faisant en amont de l'opération d'amplification.

Avantageusement, la charge utile comporte des moyens d'amplification incluant N_{TWTA} lignes d'amplification aptes à amplifier N_{TWTA} signaux multiplexés, chaque ligne ayant une entrée et une sortie, N_{TWTA} étant un nombre entier tel que 2N_{GWactive} est inférieur strictement à N_{TWTA}, 2N_{GWactive} lignes formant des lignes d'amplification nominales et N_{TWTA}-2N_{GWactive} lignes formant des lignes d'amplification de secours.

Avantageusement, lesdits moyens d'amplification sont formés :
- soit par N_{TWTA} unités d'amplification comportant N_{TWTA} amplificateurs à tube à ondes progressives ou N_{TWTA} amplificateurs de puissance à état solide, chaque unité d'amplification étant apte à amplifier un signal multiplexé ;
- soit par un dispositif d'amplification multiports MPA comportant N_{TWTA} entrées et N_{TWTA} sorties et aptes à amplifier N_{TWTA} signaux multiplexés.

Selon un premier mode de réalisation, la charge utile comporte :
- des premiers moyens pour connecter sélectivement 2N_{GWactive} sorties sélectionnées parmi N_{TWTA} sorties à 2N_{GWactive} entrées aptes à recevoir 2N_{GWactive} signaux multiplexés, les 2N_{GWactive} signaux incluant N_{GWactive} signaux polarisés suivant une première polarisation et N_{GWac- tive} signaux polarisés suivant une seconde polarisation inverse de ladite première polarisation, lesdites N_{TWTA} sorties étant reliées aux dites N_{TWTA} entrées desdites N_{TWTA} lignes d'amplification;
   des seconds moyens pour connecter sélectivement 2N_{Gwactive} entrées sélectionnées parmi N_{TWTA} entrées à 2N_{GWactive} sorties, lesdites N_{TWTA} entrées étant reliées aux dites N_{TWTA} sorties desdites N_{TWTA} lignes d'amplification;
- des troisièmes moyens pour sélectivement connecter 2N_{GWactive} entrées à 2N_{GWactive} sorties sélectionnées parmi 2N_{GW} sorties, lesdites 2N_{GWactive} entrées étant reliées aux dites 2N_{GWactive} sorties desdits seconds moyens de connexion sélective.

Selon un second mode de réalisation particulièrement avantageux, 2N_{Gw} est inférieur ou égal à N_{TWTA} et ladite charge utile comporte :
- des premiers moyens pour sélectivement connecter 2N_{GWactive} sorties sélectionnées parmi N_{TWTA} sorties à 2N_{GWactive} entrées aptes à recevoir 2N_{GWactive} signaux multiplexés, les 2N_{GWactive} signaux incluant N_{GWactive} signaux destinés à une première polarisation et N_{GWactive} signaux destinés à une seconde polarisation inverse de ladite première polarisation, lesdites N_{TWTA} sorties étant reliées aux dites N_{TWTA} entrées desdites N_{TWTA} lignes d'amplification;
- des seconds moyens pour sélectivement connecter 2N_{Gw} entrées sélectionnées parmi N_{TWTA} entrées à 2N_{GW}sorties, lesdites N_{TWTA} entrées étant reliées aux dites N_{TWTA} sorties desdites N_{TWTA} lignes d'amplification.

De manière particulièrement avantageuse, la charge utile comporte :
- des moyens d'amplification incluant N₂ lignes d'amplification aptes à amplifier N₂ signaux multiplexés, chaque ligne ayant une entrée et une sortie, N₁ lignes formant des lignes d'amplification nominales et N₂-N₁ lignes formant des lignes d'amplification de secours, N₂ et N₁ étant des nombres entiers tels que le nombre entier N₁ est inférieur strictement à N₂, le nombre entier N₁ étant soit égal à 2N_{GWactive} soit égal à N_{GWactive} ;
- des premiers moyens pour connecter sélectivement N₁ sorties sélectionnées parmi N₂ sorties à N₁ entrées aptes à recevoir N₁ signaux multiplexés, lesdites N₂ sorties étant reliées aux dites N₂ entrées desdites N₂ lignes d'amplification;
- des seconds moyens pour connecter sélectivement N₃ entrées sélectionnées parmi N₂ entrées à N₃ sorties, le nombre N₃ étant soit égal à N_{GW} soit égal à 2N_{GW}, N₃ étant inférieur ou égal à N₂, lesdites N₂ entrées étant reliées aux dites N₂ sorties desdites N₂ lignes d'amplification.

Avantageusement, lesdits moyens de connexion sélective sont formés par une pluralité de commutateurs de type R.

La présente invention a également pour objet un procédé de reconfiguration d'un réseau en cas d'indisponibilité d'une desdites N_{GWactive} stations terrestres principales actives, ledit procédé utilisant une charge utile selon l'invention et comportant les étapes suivantes :
- activation d'une station terrestre sélectionnée parmi les N_{GW}-N_{GWactive} stations terrestres non activées, ladite station terrestre sélectionnée recevant au moins un signal issu d'une sortie desdits seconds moyens, ladite sortie étant connectée via lesdits seconds moyens à une sortie d'une desdites N_{TWTA} ou N₂ lignes d'amplification, dite ligne de reconfiguration, ledit réseau comportant donc un groupe N_{GWactive} stations terrestres principales dont une nouvellement activée sélectionnée parmi les N_{GW}-N_{GWactive} stations terrestres non activées ;
- commande desdits premiers moyens pour connecter l'entrée de ladite ligne de reconfiguration à une entrée apte à recevoir les signaux multiplexés destinés à l'une des stations terrestres principales parmi le groupe de N_{GWactive} stations terrestres principales dont une nouvellement activée.

La présente invention a également pour objet un satellite comportant une charge utile de voie retour selon l'invention et une charge utile de voie aller comportant :
- une pluralité d'amplificateurs faible bruit aptes à amplifier les signaux multiplexés émis par lesdites stations terrestres principales actives ;
- des moyens pour rerouter les signaux multiplexés émis par la station terrestre assurant le trafic de ladite station terrestre devenue indisponible vers l'amplificateur faible bruit destiné à amplifier les signaux multiplexés émis par ladite station terrestre devenue indisponible.

D'autres caractéristiques et avantages de l'invention ressortiront clairement de la description qui en est donnée ci-dessous, à titre indicatif et nullement limitatif, en référence aux figures annexées, parmi lesquelles :
- la figure 1 est une représentation schématique simplifiée d'une configuration multifaisceaux;
- la figure 2 a) représente un exemple de zone de couverture composée d'une pluralité d'hexagones adjacents ;
- la figure 2 b) représente une approximation de la zone de couverture de la figure 2 a) composée d'une pluralité de faisceaux circulaires ;
- la figure 3 illustre un schéma à quatre couleurs pour la couverture de l'Europe ;
- la figure 4 illustre un plan de fréquence en bande Ka ;
- la figure 5 est un bloc diagramme fonctionnel d'une architecture de charge utile de référence en voie aller selon l'état de la technique ;
- la figure 6 est un bloc diagramme fonctionnel d'une architecture de charge utile de référence en voie retour selon l'état de la technique ;
- la figure 7 représente schématiquement la partie d'une charge utile en voie retour située entre le multiplexeur et le filtre de sortie et incluant des CAMP et des tubes TWTA redondants selon l'état de la technique ;
- la figure 8 représente schématiquement une charge utile en voie retour selon un premier mode de réalisation de l'invention ;
- la figure 9 représente schématiquement une charge utile en voie retour selon un second mode de réalisation de l'invention ;

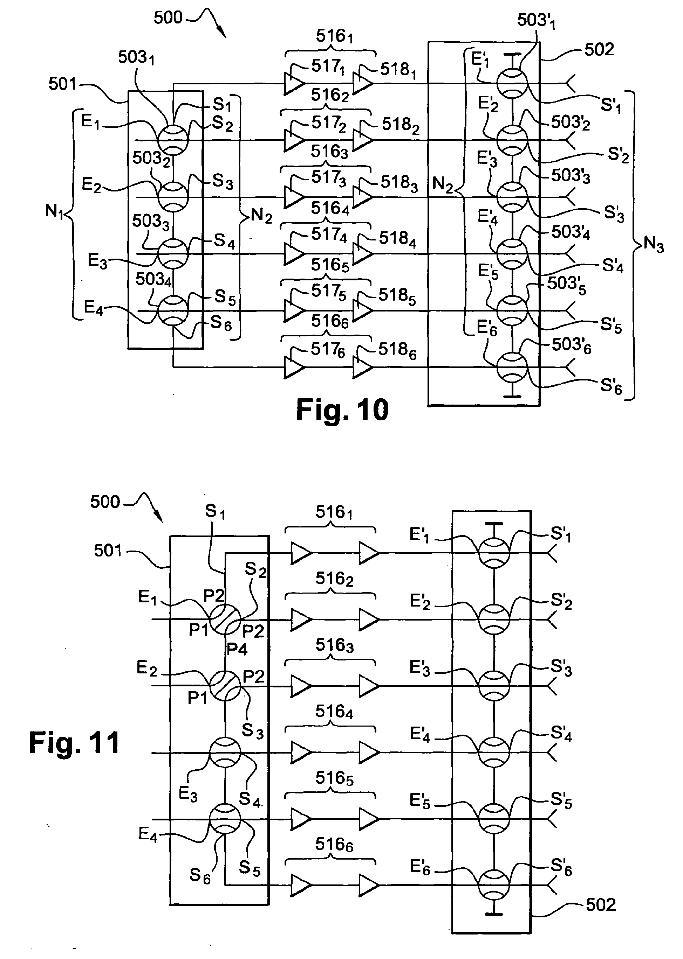

- les figures 10 à 12 représentent un exemple de charge utile selon le second mode de réalisation de l'invention dans trois configurations différentes.

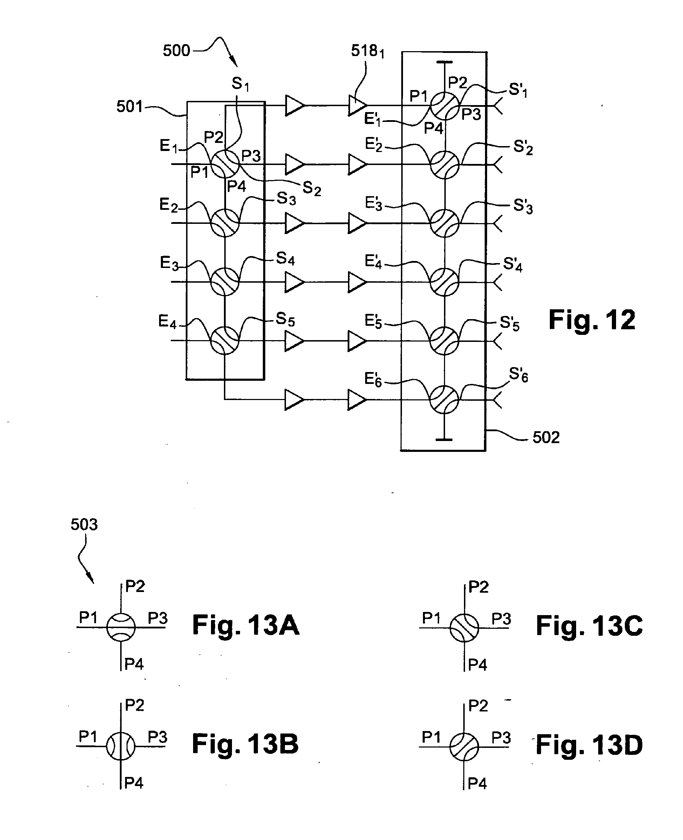

- les figures 13a à 13d représentent un commutateur de type R dans ses quatre positions possibles.

Dans toutes les figures, les éléments communs portent les mêmes numéros de référence.

L'invention concerne un réseau de télécommunication pour l'établissement de liaisons radiofréquences entre des stations terrestres principales et des terminaux terrestres via un satellite de télécommunication multifaisceaux. Un exemple d'un tel réseau est représenté en figure 1. Le réseau selon l'invention comporte une pluralité N_{GWactive} de stations terrestres principales actives (i.e. qui participent au trafic de données au sein du réseau) reliées entre elles par un réseau terrestre tel qu'un réseau Internet.

Nous nous placerons dans ce qui suit dans l'hypothèse d'un réseau bidirectionnel de sorte que le satellite relaye :
- les signaux émis par les N_{GWactive} stations terrestres principales actives vers les cellules, cette première liaison formant la voie aller,
- les signaux émis lesdites cellules vers les N_{GWactive} stations terrestres principales actives, cette deuxième liaison formant la voie retour.

Par ailleurs, le réseau comporte N_{GW} stations terrestres principales, N_{GW} étant un nombre entier strictement supérieur au nombre N_{GWactive} de stations terrestres principales actives (par exemple, N_{GW}=N_{GWactive}+1). Les N_{GW} stations terrestres principales incluent les N_{GWactive} stations terrestres principales actives et sont reliées entre elles via le réseau terrestre mentionné plus haut. Parmi ces N_{GW} stations terrestres principales, N_{GW}-N_{GWactive} stations terrestres principales sont non actives (i.e. elles ne participent pas au trafic de données au sein du réseau).

Comme nous allons le voir plus en détails par la suite en référence aux figures 8 à 14, grâce à l'invention, on utilise au moins une station terrestre additionnelle non active en plus du nombre total de stations terrestres actives N_{Gwactive} nécessaires à la couverture de la zone de service. Les stations N_{GW} terrestres principales sont localisées dans des endroits différents. La présence d'au moins une station terrestre supplémentaire permet de commuter d'une station terrestre défaillante ou momentanément indisponible vers cette station terrestre. Une telle configuration implique bien entendu que l'ensemble des stations terrestres soient reliées au même réseau de télécommunication pour être interchangeable ; cette configuration est particulièrement intéressante non seulement en cas de panne d'une station terrestre principale mais aussi et surtout opérationnellement en cas d'indisponibilité momentanée d'une-station terrestre principale, par exemple en cas de mauvais temps (pluie entraînant une altération des signaux radiofréquences) ou en cas de maintenance planifiée.

La figure 8 représente schématiquement la partie d'une charge utile 300 en voie retour permettant la mise en oeuvre d'un réseau selon l'invention. Cette partie de charge utile 300 est située entre le multiplexeur et le filtre d'émission. De façon connue et non représentée, la charge utile 300 reçoit N_{c} signaux reçus d'une pluralité N_{c} cellules comportant les terminaux utilisateurs ; ces N_{c} signaux sont chacun amplifiés par un amplificateur faible bruit LNA. Chaque signal est ensuite translaté en fréquence par un circuit convertisseur de fréquence généralement formé par un oscillateur local et filtré par un filtre de réception (du type filtre passe bande) de façon à former N_{c} canaux en accord avec le plan de fréquence de la liaison descendante sur la voie retour. Les canaux destinés à une même station terrestre principale (pour une même polarisation) sont ensuite regroupés pour former un signal multiplexé via un multiplexeur (à N_{c} entrées et 2N_{GWactive} sorties) : la structure de ce signal multiplexé est identique à celle d'un signal émis par une station terrestre principale vers le satellite sur la liaison montante en voie aller. On a donc 2N_{GWactive} signaux en sortie du multiplexeur : les 2N_{GWactive} signaux incluent N_{GWactive} signaux destinés à une première polarisation et N_{GWactive} signaux destinés à une seconde polarisation inverse de la première polarisation (il peut s'agir d'une polarisation à sens circulaire droit ou gauche ou d'une polarisation linéaire à sens horizontal et vertical). Chacun des 2N_{GWactive} signaux est amplifié au travers d'un amplificateur de puissance 316 HPA généralement formé par un amplificateur de canal 317 CAMP et un amplificateur à tube à ondes progressives 318 TWTA formant 2N_{GWactive} signaux de liaison descendante en voie retour. La charge utile 300 inclut NT_{WTA} amplificateurs de puissance 316 HPA (appelés indifféremment par la suite N_{TWTA} lignes d'amplification) formés par N_{TWTA} amplificateurs de canal 317 CAMP et N_{TWTA} amplificateurs à tube à ondes progressives 318 TWTA, N_{TWTA} étant strictement supérieur à 2N_{Gwactive}. La charge utile 300 comporte donc 2N_{GWactive} amplificateurs nominaux destinés à amplifier les 2N_{GWactive} signaux et N-WTA-2NG_{Wactive} amplificateurs redondants.

La charge utile 300 comporte également des premiers moyens 301 (à 2N_{GWactive} entrées et N_{TWTA} sorties) pour sélectivement connecter 2N_{GWactive} sorties sélectionnées parmi N_{TWTA} sorties à 2N_{GWactive} entrées. Les 2N_{GWactive} entrées reçoivent les 2N_{GWactive} signaux multiplexés. Les premiers moyens 301 sont par exemple formés par des commutateurs tels que des commutateurs de type R. Les N_{TWTA} sorties des premiers moyens 301 sont reliées aux N_{TWTA} entrées des N_{TWTA} lignes d'amplification 316. En cas de panne d'un des 2N_{GWactive} amplificateurs de puissance 316 (panne d'un tube par exemple) recevant les 2N_{GWactive} signaux multiplexés, il est alors possible d'utiliser un autre amplificateur en reroutant le signal sur un autre amplificateur parmi les N_{TWTA}-2N_{GWactive} amplificateurs redondants.

La charge utile 300 comporte par ailleurs des seconds moyens 302 (à N_{TWTA} entrées et 2N_{GWactive} sorties) pour sélectivement connecter 2N_{GWactive} entrées sélectionnées parmi N_{TWTA} entrées à 2N_{GWactive} sorties, les N_{TWTA} entrées étant reliées aux N_{TWTA} sorties des N_{TWTA} lignes d'amplification 316. Les seconds moyens 302 sont également par exemple réalisés sous la forme de commutateurs de type R. Les seconds moyens 302 reçoivent en entrées les sorties des N_{TWTA} amplificateurs de puissances 316 pour produire en sortie 2N_{GWactive} signaux amplifiés de liaison descendante en voie retour. Ces 2N_{GWactive} sont destinés à N_{GWactive} stations terrestres principales actives.

En cas de panne d'un des 2N_{GWactive} amplificateurs de puissance 316, nous avons vu qu'un autre amplificateur était utilisé en reroutant le signal sur cet autre amplificateur via les premiers moyens 301. Les seconds moyens 302 permettent de connecter cette ligne d'amplification à la sortie desdits seconds moyens 302 correspondant à la station terrestre principale initialement desservie par la ligne d'amplification défaillante.

La charge utile 300 comporte en outre des troisièmes moyens 303 (à 2N_{GWactive} entrées et 2N_{GW} sorties) pour sélectivement connecter 2N_{GWactive} entrées à 2N_{GWactive} sorties sélectionnées parmi 2N_{GW} sorties. Les 2N_{GWactive} entrées des troisièmes moyens 303 sont reliées aux 2N_{GWactive} sorties des seconds moyens 302 de connexion sélective. Ainsi, en cas d'indisponibilité d'une station terrestre initialement active, il est possible de rerouter le signal initialement destiné à cette station terrestre vers une des N_{GW}-N_{GWactive} stations terrestres principales non actives devenue active. On notera au passage que dans l'exemple présenté ici, deux signaux seront reroutés vers deux sorties des troisièmes moyens 303 (puisque le réseau utilise deux polarisations, chaque station terrestre reçoit deux signaux correspondant aux deux polarisations).

On notera que la charge utile 300 comporte bien entendu également N_{GW} filtres de sortie et 2N_{GW} cornets afin de pouvoir potentiellement émettre vers chacun des N_{GW} stations terrestres disponibles.

La charge utile 300 présente toutefois un inconvénient dans la mesure où la commutation opérée par les troisièmes moyens 303 se fait sur un signal à une puissance élevée, une commutation en puissance n'étant pas souhaitable. A titre purement illustratif, un signal en entrée de la ligne d'amplification a une puissance de l'ordre du milliwatt alors que le signal amplifié a une puissance de l'ordre d'une centaine de watts. Une façon de s'affranchir de cet inconvénient consiste par exemple à utiliser la fonction silencieuse (« mute function » en anglais) de l'amplificateur de canal CAN 317 de la ligne d'amplification 316 sur laquelle l'opération de commutation va avoir lieu : le gain de l'amplificateur CAN 317 est alors suffisamment réduit de sorte que l'amplificateur à tube 318 qui le suit n'a pratiquement aucun signal à amplifier, l'opération de commutation se faisant alors à puissance réduite.

La figure 9 illustre une solution plus élégante permettant de s'affranchir du problème de commutation en puissance mentionné plus haut.

La figure 9 représente schématiquement la partie d'une charge utile 400 en voie retour permettant la mise en oeuvre d'un réseau selon l'invention. Comme dans le cas de la figure 3, cette partie de charge utile 400 est située entre le multiplexeur et le filtre de sortie. De façon connue et non représentée, la charge utile 400 reçoit N_{c} signaux reçus d'une pluralité N_{c} cellules comportant les terminaux utilisateurs ; ces N_{c} signaux sont chacun amplifiés par un amplificateur faible bruit LNA. Chaque signal est ensuite translaté en fréquence par un circuit convertisseur de fréquence généralement formé par un oscillateur local et filtré par un filtre de réception (du type filtre passe bande) de façon à former N_{c} canaux en accord avec le plan de fréquence de la liaison descendante sur la voie retour. Les canaux destinés à une même station terrestre principale (pour une même polarisation) sont ensuite regroupés pour former un signal multiplexé via un multiplexeur (à N_{c} entrées et 2N_{GWactive} sorties) : la structure de ce signal multiplexé est identique à celle d'un signal émis par une station terrestre principale vers le satellite sur la liaison montante en voie aller. On a donc 2N_{GWactive} signaux en sortie du multiplexeur : les 2N_{GWactive} signaux incluent N_{GWactive} signaux destinés à une première polarisation et N_{GWactive} signaux destinés à une seconde polarisation inverse de la première polarisation (il peut s'agir d'une polarisation à sens circulaire droit ou gauche ou d'une polarisation linéaire à sens horizontal et vertical). Chacun des 2N_{GWactive} signaux est amplifié au travers d'un amplificateur de puissance 417 HPA généralement formé par un amplificateur de canal 417 CAMP et un amplificateur à tube à ondes progressives 418 TWTA formant 2N_{GWactive} signaux de liaison descendante en voie retour. La charge utile 400 inclut N_{TWTA} amplificateurs de puissance 416 HPA formés par N_{TWTA} amplificateurs de canal 417 CAMP et N_{TWTA} amplificateurs à tube à ondes progressives TWTA, N_{TWTA} étant strictement supérieur à 2N_{GWactive}. La charge utile 400 comporte donc 2N_{GWactive} amplificateurs nominaux destinés à amplifier les 2N_{GWactive} signaux et N_{TWTA}-2N_{GWactive} amplificateurs redondants.

La charge utile 400 comporte également des premiers moyens 401 (à 2N_{GWactive} entrées et N_{TWTA} sorties) pour sélectivement connecter 2-N_{GWactive} sorties sélectionnées parmi N_{TWTA} sorties à 2N_{GWactive} entrées. Les 2N_{GWactive} entrées reçoivent les 2N_{GWactive} signaux multiplexés. Les premiers moyens 401 sont par exemple formés par des commutateurs tels que des commutateurs de type R. Les N_{TWTA} sorties des premiers moyens 401 sont reliées aux N_{TWTA} entrées des N_{TWTA} lignes d'amplification 416. En cas de panne d'un des 2N_{GWactive} amplificateurs de puissance 416 (panne d'un tube par exemple) recevant les 2N_{GWactive} signaux multiplexés, il est alors possible d'utiliser un autre amplificateur en reroutant le signal sur un autre amplificateur parmi les N_{TWTA}-2N_{GWactive} amplificateurs redondants.

La charge utile 400 comporte en outre des seconds moyens 402 (à N_{TWTA} entrées et 2N_{GW} sorties) pour sélectivement connecter 2N_{GW} entrées sélectionnées parmi N_{TWTA} entrées à 2N_{GW} sorties. Les N_{TWTA} entrées des seconds moyens 402 sont reliées aux N_{TWTA} sorties des N_{TWTA} lignes d'amplification 416. Les seconds moyens 402 sont par exemple réalisés sous la forme de commutateurs de type R.

En cas de panne d'un des 2N_{Gwactive} amplificateurs de puissance 416 (panne d'un tube par exemple) recevant les 2N_{GWactive} signaux multiplexés, il est possible d'utiliser un autre amplificateur en reroutant le signal via les premiers moyens 401 sur une autre ligne d'amplification parmi les N_{TWTA}-2N_{GWactive} amplificateurs redondants. Les seconds moyens 402 permettent de connecter cette ligne d'amplification à la sortie des seconds moyens 402 correspondant à la station terrestre principale initialement desservie par la ligne d'amplification défaillante.

En cas d'indisponibilité d'une des N_{GWactive} stations terrestres principales actives, le procédé de reconfiguration du réseau est le suivant :
- on commence par activer une station terrestre sélectionnée parmi les N_{GW}-N_{GWactive} stations terrestres non activées initialement. La station terrestre sélectionnée est apte à recevoir un signal issu d'une sortie des seconds moyens 402, cette sortie étant connectée via les seconds moyens 402 à une sortie d'une des N_{TWTA} lignes d'amplification que nous appellerons ligne de reconfiguration. Le réseau comporte donc un groupe de N_{GWactive} stations terrestres principales actives dont une nouvellement activée sélectionnée parmi les N_{GW}-N_{GWactive} stations terrestres non activées ;
- on commande les premiers moyens 401 pour connecter l'entrée de la ligne de reconfiguration à une entrée apte à recevoir les signaux multiplexés destinés à l'une des stations terrestres principales parmi le groupe de N_{GWactive} stations terrestres principales dont une nouvellement activée.

On notera que deux solutions sont possibles : soit on alimente en puissance la ligne de reconfiguration après l'activation de la station terrestre sélectionnée soit on laisse la ou les lignes de reconfiguration potentielle(s) toujours alimentées (en veille) pour s'assurer que la ou les ligne(s) est (sont) prête(s) à être utilisée(s). Dans le premier cas, on introduit un délai de ré-chauffement lié à la mise sous puissance de la ligne de reconfiguration. Dans le second cas, on s'affranchit de ce délai (en revanche, on est obligé de maintenir une certaine alimentation en puissance, ce qui induit une consommation plus importante).

Il est ainsi tout à fait possible de prévoir la mise en veille la ligne de reconfiguration lorsqu'une opération de maintenance d'une station terrestre principale est planifiée : on évite ainsi le délai induit par réchauffement de la ligne d'amplification.

On notera que la reconfiguration dépend du type de moyens de connexion sélective utilisés : on peut par exemple connecter directement l'entrée de la ligne de reconfiguration à l'entrée apte à recevoir les signaux multiplexés initialement destinés à la station terrestre principale indisponible. On peut également connecter l'entrée de la ligne de reconfiguration à une entrée différente de l'entrée apte à recevoir les signaux multiplexés initialement destinés à la station terrestre principale indisponible : dans ce cas, il faudra opérer une autre commutation (cf. exemple des figures 10 à 13).

Cette reconfiguration est très rapide puisque, même dans le cas où la ligne de reconfiguration n'est pas en veille, la mise sous puissance de la ligne de reconfiguration et la commutation des premiers moyens 401 prend seulement quelques minutes (typiquement 4 minutes).

Grâce à la charge utile 400 selon l'invention, il est donc possible de rerouter les signaux initialement destinés à une station terrestre indisponible vers une station terrestre de substitution sans opérer de commutation en puissance (la commutation des seconds moyens 402 se faisant en amont des lignes d'amplification 416, donc à faible puissance).

Le trafic est donc redirigé sans réduire le gain des amplificateurs CAMP 417 (ou même éteindre complètement les lignes d'amplification 416).

Selon ce mode de réalisation, on ne fait plus de distinction entre les amplificateurs nominaux et les amplificateurs redondants, un amplificateur redondant pouvant devenir un amplificateur nominal pour satisfaire une station terrestre de remplacement.

La condition de fonctionnement d'un réseau utilisant une charge utile telle que la charge utile 400 est que le nombre 2N_{GW} soit inférieur ou égal au nombre total N_{TWTA} d'amplificateurs. Il convient de noter ici que le réseau selon l'invention permet d'utiliser un nombre N_{GW} de stations terrestres principales qui n'est pas doublé par rapport au nombre de stations terrestres actives.

Les problématiques liées d'une part à la reconfiguration liée à la perte d'un amplificateur et d'autre part à la reconfiguration liée à l'indisponibilité d'une station terrestre sont deux problématiques décorrélées.

On notera que, dans le mode de réalisation présenté ici, en cas d'indisponibilité d'une station terrestre principale, on a deux lignes de reconfiguration recevant chacune les signaux multiplexés suivant une polarisation initialement destinés à la station terrestre principale indisponible (le réseau utilise en effet deux polarisations, chaque station terrestre recevant deux signaux correspondant aux deux polarisations).

Comme pour la charge utile 300 de la figure 8, on notera par ailleurs que la charge utile 400 comporte bien entendu également N_{GW} filtres de sortie et 2N_{GW} cornets afin de pouvoir potentiellement émettre vers chacun des N_{GW} stations terrestres disponibles.

Les figures 10 à 12 illustrent un exemple simplifié de charge utile 500 selon le second mode de réalisation de l'invention (cas de la charge utile 400 telle que représentée en figure 9) dans trois configurations différentes. Par souci de simplification, nous n'introduirons pas (contrairement à la charge utile 400) d'exigence liée aux deux systèmes d'amplification (un système par polarisation) dans le cas des figures 10 à 13, le principe restant le même selon que l'on fonctionne avec un ou deux système(s) d'amplification.

Avant de décrire les figures 10 à 12, rappelons en référence aux figures 13A à 13D le fonctionnement d'un commutateur en guide d'onde 503 de type R. Les figures 13A à 13D représentent les quatre configurations possibles d'un commutateur de type R. Les commutateurs de type R sont adaptés pour tourner par pas de 45° et pour connecter n'importe quel port donné à n'importe lesquels des trois autres portes, seul le cas de la connexion entre des ports opposés impliquant une isolation de chacun des autres ports ; ces commutateurs ont quatre configurations distinctes de connexion. Ce commutateur a quatre ports P1, P2, P3 et P4 (numérotation dans le sens des aiguilles d'une montre) et un moyen de commutation adapté à :
- connecter deux ports opposés en isolant les autres (figures 13A et 13B) ;
- connecter deux ports voisins ainsi que les autres ports (figures 13C et 13D).

La charge utile 500 comporte des premiers moyens 501 comportant N₁ (N₁=4 dans notre exemple) entrées E (E₁ à E_{N1} avec N₁=4) et N₂ (N₂ =6 dans notre exemple) sorties S (S₁ à S_{N2} avec N₂=6). Les N₁ entrées sont aptes à recevoir N₁ signaux multiplexés ; en comparaison avec l'exemple de la figure 9, N₁ est égal à 2N_{GWactive}. Toutefois, si on utilise une charge utile avec deux systèmes d'amplification (un système par polarisation), N₁ est égal à N_{GWactive} pour chaque système d'amplification. L'invention s'applique donc à la fois pour une charge utile à 2N_{GWactive} entrées que pour une charge utile organisée en deux systèmes d'amplification ayant chacun N_{GWactive} entrées. Les premiers moyens 501 comportent une série de N₁ commutateurs 503 de type R (503₁ à 503_{N1} avec N₁=4): en référence aux figures 13A à 13C, les N₁ entrées des premiers moyens 501 correspondent aux ports P1 des commutateurs 503. Par ailleurs, chaque port P4 d'un commutateur est relié au port P2 du commutateur suivant. Les N₂ sorties correspondent aux ports P3 des commutateurs 503 ainsi qu'au port P2 du commutateur 503₁ situé à une première extrémité de la série de commutateurs 503 et au port P4 du commutateur 503₄ situé à une seconde extrémité de la série de commutateurs 503. N₂ est un entier strictement supérieur à N₁ ; en comparaison avec l'exemple de la figure 9, N₂ est égal à N_{TWTA}. Si on utilise une charge utile avec deux systèmes d'amplification (un système par polarisation), N₂ est égal à N_{TWTA}/2 pour chaque système d'amplification.

La charge utile 500 inclut N₂ amplificateurs de puissance 516 ou lignes d'amplification (516₁ à 516_{N2} avec N₂=6) formés par N₂ amplificateurs de canal CAMP 517 (517₁ à 517_{N2} avec N₂=6) et N₂ amplificateurs à tube à ondes progressives TWTA 518 (518₁ à 518_{N2} avec N₂=6). Les N₂ sorties sont reliées aux N₂ entrées des N₂ lignes d'amplification 516. On a donc N₂ - N₁ amplificateurs 516 de secours (les amplificateurs 516₁ et 516₆ dans notre exemple). Dans la configuration de la figure 10, les premiers moyens 501 sont tels que les entrées E₁ à E₄ sont reliées aux sorties S₂ à S₅.

La charge utile 500 comporte par ailleurs des seconds moyens 502 comportant N₂ entrées E' (E'₁ à E'_{N2} avec N₂=6) et N₃ (N₃ =6 dans notre exemple) sorties S' (S'₁ à S'_{N2} avec N₂=6). Les N₂ entrées sont aptes à recevoir N₂ signaux multiplexés amplifiés. Le nombre N₃ est inférieur ou égal au nombre total N₂ d'amplificateurs (dans notre exemple N₃ =N₂).

Les N₂ entrées E'₁ à E'_{N2} des seconds moyens 502 sont reliées aux N₂ sorties des N₂ lignes d'amplification 516₁ et 516_{N2}.

Les N₃ sorties S'₁ à S'_{N3} des seconds moyens 502 sont reliées aux N₂ entrées des N₂ lignes d'amplification E'₁ et E'_{N2}.

Les seconds moyens 502 comportent une série de N₃ commutateurs 503' de type R (503'₁ à 503'_{N3} avec N₃=6): en référence aux figures 13A à 13C, les N₁ entrées des seconds moyens 502 correspondent aux ports P1 des commutateurs 503'. Par ailleurs, chaque port P4 d'un commutateur est relié au port P2 du commutateur suivant. Les N₃ sorties correspondent aux ports P3 des commutateurs 503'. Les N₃ sorties correspondent aux ports de sortie permettant l'envoi de signaux vers les stations terrestres principales. En comparaison avec l'exemple de la figure 9, N₃ est égal à 2N_{GW}. Toutefois, si on utilise une charge utile avec deux systèmes d'amplification (un système par polarisation), N₃ est égal à N_{GW}. En figure 10, les commutateurs de type R sont tels que leur port P1 est relié électriquement à leur port P3.

Dans l'exemple, les stations terrestres principales non actives sont les stations terrestres reliées aux sorties S'₁ et S'₆.

Le cas d'une indisponibilité (maintenance, intempérie,...) d'une des N_{GWactive} stations terrestres principales actives (dans notre exemple la station terrestre principale reliée à la sortie S'₃) est illustré par le passage de la figure 10 à la figure 11.

On commence par activer une station terrestre sélectionnée parmi les N_{GW}-N_{GWactive} stations terrestres non activées initialement : dans notre exemple, il s'agit de la station terrestre reliée à la sortie S'₁. Cette sortie S'₁ est connectée via l'entrée E'₁ des seconds moyens 502 à la sortie de la ligne d'amplification 516₁ que nous-appellerons ligne de reconfiguration. On alimente en puissance cette ligne de reconfiguration 516₁ (comme nous l'avons mentionné auparavant, cette étape n'est pas nécessaire si la ligne de reconfiguration est déjà en veille). On commande alors les premiers moyens 501 pour connecter l'entrée de la ligne de reconfiguration à l'entrée E₁ (on fait tourner le premier commutateur R de sorte que son port P1 soit relié à son port P2 et que son port P3 soit relié à son port P4) apte à recevoir les signaux multiplexés initialement destinés à la station terrestre principale recevant les signaux de la sortie S'₂. On commande également les premiers moyens 501 pour connecter l'entrée de la ligne d'amplification 516₂ à l'entrée E₂ (on fait tourner le deuxième commutateur R de sorte que son port P1 soit relié à son port P2 et que son port P3 soit relié à son port P4) apte à recevoir les signaux multiplexés initialement destinés à la station terrestre principale devenue indisponible. On voit ici que la reconfiguration du réseau a nécessité deux commutations au niveau des premiers moyens 501 (des moyens de commutation plus sophistiqués permettent toutefois de directement connecter l'entrée de la ligne de reconfiguration à l'entrée E₂ apte à recevoir les signaux multiplexés initialement destinés à la station terrestre principale devenue indisponible de façon à s'affranchir de cet effet « domino »). On constate également que cette reconfiguration n'a nécessité aucune action sur les seconds moyens 502 et que les commutations se sont effectuées sur des signaux à faible puissance. On notera par ailleurs que les N₂ - N₁ amplificateurs 516 de secours ont changé : il s'agissait des amplificateurs 516₁ et 516₆ dans le cas de la figure 10 ; il s'agit des amplificateurs 516₃ et 516₆ dans notre exemple.

Le cas d'une panne d'un des N₂ amplificateurs de puissance 516 (panne d'un tube par exemple) est illustré par le passage de la figure 10 à la figure 12. Dans le cas de la figure 12, le tube 518₁ est défaillant et le tube 518₂ devient le tube de secours. Dans ce cas, on fait tourner l'ensemble des commutateurs R des premiers moyens 501 de sorte que leur port P1 soit relié à leur port P4 et que leur port P2 soit relié à leur port P3. De même, on fait tourner l'ensemble des commutateurs R des seconds moyens 502 de sorte de que leur port P1 soit relié à leur port P2 et que leur port P3 soit relié à leur port P4. Dans ce cas, la ligne d'amplification 518₂ devient la ligne d'amplification de secours. Les sorties S'₂ à S'₅ des seconds moyens 502 émettant les signaux vers les stations terrestres principales restent inchangées. On constate donc que la panne d'un tube (ou d'une ligne d'amplification) n'entraîne pas de reconfiguration des stations terrestres principales actives.

L'invention a été plus particulièrement décrite dans le cas d'une charge utile de voie retour. Toutefois, il peut être également souhaitable d'appliquer le même principe à une charge utile de voie aller au niveau des amplificateurs faible bruit (tels que les amplificateurs LNA 112 représentés en figure 6). Dans ce cas, la charge utile de voie aller comporte :
- une pluralité d'amplificateurs faible bruit aptes à amplifier les signaux multiplexés émis par les stations terrestres principales actives ;
- des moyens pour rerouter les signaux multiplexés émis par la station terrestre assurant le trafic de la station terrestre devenue inactive vers l'amplificateur faible bruit destiné à amplifier les signaux multiplexés émis par la station terrestre devenue indisponible.

Bien entendu, l'invention n'est pas limitée au mode de réalisation qui vient d'être décrit.

Ainsi, l'invention a été plus particulièrement décrite dans le cas d'amplificateur formé par un CAMP suivi d'un TWTA. On notera cependant que l'invention s'applique également au cas d'un amplificateur SSPA ou d'un équipement du type MPA.

## Revendications

1. Charge utile (400, 500) de voie retour d'un satellite de télécommunication multifaisceaux utilisée dans un réseau de télécommunication pour l'établissement de liaisons radiofréquences entre des stations terrestres principales et des terminaux terrestres via un satellite de télécommunication à plusieurs faisceaux, dit satellite multifaisceaux, ledit réseau comportant :
- un satellite multifaisceaux incluant une charge utile pour la réception, le traitement et la réémission des signaux de télécommunication reçus par ledit satellite,
- une zone de services composée d'une pluralité de zones de couvertures élémentaires, dites cellules, chaque cellule comportant une pluralité de terminaux terrestres,
- une pluralité N_{GWactive} de stations terrestres principales actives reliées entre elles, N_{GWactive} étant un nombre entier, ledit satellite relayant les signaux émis par lesdites N_{GWactive} stations terrestres principales actives vers lesdites cellules,
- N_{GW} stations terrestres principales, N_{GW} étant un nombre entier strictement supérieur au nombre N_{GWactive} de stations terrestres principales actives, lesdites N_{GW} stations terrestres principales étant reliées entre elles et incluant lesdites N_{GWactive} stations terrestres principales actives de sorte que N_{GW}-N_{GWactive} stations terrestres principales sont non actives.
ladite charge utile comportant des moyens (401, 402, 501, 502) pour rerouter un signal à partir d'une pluralité de signaux émis par lesdites cellules, ledit signal étant initialement destiné à une desdites N_{GWactive} stations terrestres principales actives devenue indisponible, vers une desdites N_{GWactive} stations terrestres principales dont une nouvellement activée sélectionnée parmi les N_{GW}-N_{GWactive} stations terrestres initialement non activées, ladite charge utile étant **caractérisée en ce qu'**elle comporte des moyens (416, 516) pour amplifier ledit signal rerouté, l'opération de reroutage se faisant en amont de l'opération d'amplification.

2. Charge utile (400) selon la revendication précédente **caractérisée en ce qu'**elle comporte des moyens (416) d'amplification incluant N_{TWTA} lignes d'amplification aptes à amplifier N_{TWTA} signaux, chaque ligne ayant une entrée et une sortie, N_{TWTA} étant un nombre entier tel que 2N_{GWactive} est inférieur strictement à N_{TWTA}, 2N_{GWactive} lignes formant des lignes d'amplification nominales et N_{TWTA}-2N_{GWactive} lignes formant des lignes d'amplification de secours.

3. Charge utile (400) selon la revendication précédente **caractérisée en ce que** lesdits moyens (416) d'amplification sont formés :
- soit par N_{TWTA} unités d'amplification comportant N_{TWTA} amplificateurs à tube à ondes progressives (417) ou N_{TWTA} amplificateurs de puissance à état solide, chaque unité d'amplification étant apte à amplifier un signal ;
- soit par un dispositif d'amplification multiports MPA comportant N_{TWTA} entrées et N_{TWTA} sorties et aptes à amplifier N_{TWTA} signaux.

4. Charge utile (400) selon l'une des revendications 2 à 3 **caractérisée en ce que** 2N_{GW} est inférieur ou égal à N_{TWTA}, ladite charge utile comportant :
- des premiers moyens (401) pour sélectivement connecter 2N_{GWactive} sorties sélectionnées parmi N_{TWTA} sorties à 2N_{GWactive} entrées aptes à recevoir 2N_{GWactive} signaux, les 2N_{GWactive} signaux incluant N_{GWactive} signaux destinés à une première polarisation et N_{GWactive} signaux destinés à une seconde polarisation inverse de ladite première polarisation, lesdites N_{TWTA} sorties étant reliées aux dites N_{TWTA} entrées desdites N_{TWTA} lignes d'amplification;
- des seconds moyens (402) pour sélectivement connecter 2N_{GW} entrées sélectionnées parmi N_{TWTA} entrées à 2N_{GW} sorties, lesdites N_{TWTA} entrées étant reliées aux dites N_{TWTA} sorties desdites N_{TWTA} lignes d'amplification.

5. Charge utile (500) selon l'une des revendications 1 à 3 **caractérisée en ce qu'**elle comporte :
- des moyens d'amplification (516) incluant N₂ lignes d'amplification aptes à amplifier N₂ signaux, chaque ligne ayant une entrée et une sortie, N₁ lignes formant des lignes d'amplification nominales et N₂-N₁ lignes formant des lignes d'amplification de secours, N₂ et N₁ étant des nombres entiers tels que le nombre entier N₁ est inférieur strictement à N₂, le nombre entier N₁ étant soit égal à 2N_{GWactive} soit égal à N_{GWac- tive} ;
- des premiers moyens (501) pour sélectivement connecter N₁ sorties sélectionnées parmi N₂ sorties à N₁ entrées aptes à recevoir N₁ signaux, lesdites N₂ sorties étant reliées aux dites N₂ entrées desdites N₂ lignes d'amplification;
- des seconds moyens (502) pour sélectivement connecter N₃ entrées sélectionnées parmi N₂ entrées à N₃ sorties, le nombre N₃ étant soit égal à N_{GW} soit égal à 2N_{GW}, N₃ étant inférieur ou égal à N₂, lesdites N₂ entrées étant reliées aux dites N₂ sorties desdites N₂ lignes d'amplification.

6. Charge utile selon l'une des revendications 4 à 5 **caractérisée en ce que** lesdits moyens (401, 402, 501, 502) de connexion sélective sont formés par une pluralité de commutateurs de type R.

7. Procédé de reconfiguration d'un réseau en cas d'indisponibilité d'une desdites N_{GWactive} stations terrestres principales actives, ledit procédé utilisant une charge utile (400, 500) selon l'une des revendications 4 à 6, ledit procédé comportant les étapes suivantes :
- activation d'une station terrestre sélectionnée parmi les N_{GW}-N_{GWactive} stations terrestres non activées, ladite station terrestre sélectionnée recevant au moins un signal issu d'une sortie desdits seconds moyens (402, 502), ladite sortie étant connectée via lesdits seconds moyens (402, 502) à une sortie d'une desdites N_{TWTA} ou N₂ lignes d'amplification, dite ligne de reconfiguration, ledit réseau comportant donc un groupe N_{GWactive} stations terrestres principales dont une nouvellement activée sélectionnée parmi les N_{GW}-N_{GWactive} stations terrestres non activées ;
- commande desdits premiers moyens (401, 501) pour connecter l'entrée de ladite ligne de reconfiguration à une entrée apte à recevoir les signaux destinés à l'une des stations terrestres principales parmi le groupe de N_{GWactive} stations terrestres principales dont une nouvellement activée.

8. Satellite comportant une charge utile de voie retour selon l'une des revendications 1 à 6 et une charge utile de voie aller comportant :
- une pluralité d'amplificateurs faible bruit aptes à amplifier les signaux émis par lesdites stations terrestres principales actives ;
- des moyens pour rerouter les signaux émis par la station terrestre assurant le trafic de ladite station terrestre devenue indisponible vers l'amplificateur faible bruit destiné à amplifier les signaux émis par ladite station terrestre devenue indisponible.

## Claims

1. A return payload (400, 500) of a multispot telecommunication satellite used in a telecommunication network for establishing radiofrequency links between gateways and ground terminals via a telecommunication satellite with several spot beams, known as a multispot satellite, said network comprising:
- a multispot satellite including a payload for receiving, processing and resending the telecommunication signals received by said satellite,
- a service area comprised of a plurality of basic coverage areas, called cells, each cell comprising a plurality of ground terminals,
- a plurality N_{GWactive} of active interconnected gateways, N_{GWactive} being an integer, said satellite relaying the signals sent by said N_{GWactive} active gateways to said cells,
- N_{GW} gateways, N_{GW} being an integer strictly greater than the number N_{GWactive} of active gateways, said N_{GW} gateways being interconnected and including said N_{GWactive} active gateways such that N_{GW}-N_{GWactive} gateways are not active.
said payload comprising means (401, 402, 501, 502) to reroute a signal from a plurality of signals sent by said cells, said signal initially being intended for one of said N_{GWactive} active gateways that had become unavailable, to one of said N_{GWactive} gateways including one newly activated gateway selected from among the N_{GW}-N_{GWactive} initially inactivated gateways, said payload being **characterized in that** it comprises means (416, 516) to amplify said rerouted signal, the rerouting operation being done before the amplification operation.

2. The payload (400) according to the previous claim **characterized in that** it comprises amplification means (416) including N_{TWTA} amplification paths able to amplify N_{TWTA} signals, each path having an input and an output, N_{TWTA} being an integer such that 2N_{GWactive} is strictly less than N_{TWTA}, 2N_{GWactive} paths forming nominal amplification paths and N_{TWTA}-2N_{GWactive} paths forming backup amplification paths.

3. The payload (400) according to the previous claim **characterized in that** said amplification means (416) are formed:
- either by N_{TWTA} amplification units comprising N_{TWTA} traveling wave tube amplifiers (317, 417) or N_{TWTA} solid state power amplifiers, each amplification unit being able to amplify a signal;
- or by an MPA multiport amplification, device comprising N_{TWTA} inputs and N_{TWTA} outputs and able to amplify N_{TWTA} signals.

4. The payload (400) according to one of claims 2 to 3 **characterized in that** 2N_{GW} is less than or equal to N_{TWTA}, said payload comprising:
- first means (401) to selectively connect 2N_{GWactive} outputs selected from among N_{TWTA} outputs to 2N_{GWactive} inputs able to receive 2N_{GWactive} signals, the 2N_{GWactive} signals induding N_{GWative} signals intended for a first polarization and N_{GWactive} signals intended for a second polarization opposite from said first polarization, said N_{TWTA} outputs being connected to said N_{TWTA} inputs of said N_{TWTA} amplification paths;
- second means (402) to selectively connect 2N_{GW} inputs selected from among N_{TWTA} inputs to 2N_{GW} outputs, said N_{TWTA} inputs being connected to said N_{TWTA} outputs of said N_{TWTA} amplification paths.

5. The payload (500) according to one of claims 1 to 3 **characterized in that** it comprises:
- amplification means (516) including N₂ amplification paths able to amplify N₂ signals, each path having an input and an output, N₁ paths forming nominal amplification paths and N₂-N₁ paths forming backup amplification paths, N₂ and N₁ being integers such that the integer N₁ is strictly less than N₂, the integer N₁ either being equal to 2N_{GWactive} or equal to N_{GW}active;
- first means (501) to selectively connect N₁ outputs selected from among N₂ outputs to N₁ inputs able to receive N₁ signals, said N₂ outputs being connected to said N₂ inputs of said N₂ amplification paths;
- second means (502) to selectively connect N₃ inputs selected from among N₂ inputs to N₃ outputs, the number N₃ being either equal to N_{GW} or equal to 2N_{GW}, N₃ being less than or equal to N₂, said N₂ inputs being connected to said N₂ outputs of said N₂ amplification paths.

6. The payload according to one of claims 4 to 5 **characterized in that** said selective connection means (401, 402, 501, 502) are formed by a plurality of R type switches.

7. A reconfiguration method of a network in case of unavailability of one of said N_{GWactive} active gateways, said method utilizing a payload (400, 500) according to one of claims 4 to 6 comprising the following steps:
- activation of a gateway selected from among the N_{GW}-N_{GWactive} inactivated gateways, said selected gateway receiving at least one signal from an output of said second means (402, 502), said output being connected via said second means (402, 502) to an output of one of said N_{TWTA} or N₂ amplification paths, known as a reconfiguration path, said network thus comprising a group N_{GWactive} of gateways including one newly activated gateway selected from among the N_{GW}-N_{GWactive} inactivated gateways;
- control of said first means (401, 501) to connect the input of said reconfiguration path to an input able to receive signals intended for one of the gateways from among the group of N_{GWactive} gateways including one newly activated gateway.

8. A satellite comprising a return payload according to one of claims 1 to 6 and a forward payload comprising:
- a plurality of low noise amplifiers able to amplify the signals sent by said active gateways;
- means to reroute the signals sent by the gateway ensuring the traffic of said gateway that had become unavailable to the low noise amplifier intended to amplify the signals sent by said gateway that had become unavailable.

## Patentansprüche

1. Rückkanal-Nutzlast (400, 500) eines Mehrstrahl-Fernmeldesatelliten, die in einem Fernmeldenetz zum Aufbau von Funkfrequenzverbindungen zwischen Hauptbodenstationen und Bodenendgeräten über einen Mehrstrahl-Fernmeldesatelliten verwendet wird, der Mehrstrahlsatellit genannt wird, wobei das Netz Folgendes umfasst:
- einen Mehrstrahlsatelliten, der eine Nutzlast für den Empfang, die Verarbeitung und die Wiedersendung der vom Satelliten empfangenen Fernmeldesignale umfasst,
- einen Dienstbereich, der aus mehreren grundlegenden Versorgungsbereichen besteht, die Zellen genannt werden, wobei jede Zelle mehrere Bodenendgeräte umfasst,
- mehrere N_{GWactive} untereinander verbundene aktive Hauptbodenstationen, wobei N_{GWactive} eine ganze Zahl ist, wobei der Satellit die durch die N_{GWactive} aktiven Hauptbodenstationen gesendeten Signale an die Zellen überträgt,
- N_{GW} Hauptbodenstationen, wobei N_{GW} eine ganze Zahl ist, die strikt größer ist als die Zahl N_{GWactive} der aktiven Hauptbodenstationen, wobei die N_{GW} Hauptbodenstationen untereinander verbunden sind und die N_{GWactive} aktiven Hauptbodenstationen umfassen, derart, dass N_{GW}-N_{GWactive} Hauptbodenstationen nicht aktiv sind,
wobei die Nutzlast Mittel (401, 402, 501, 502) zum Umlenken eines Signals ausgehend von mehreren durch die Zellen gesendeten Signalen, wobei das Signal anfangs für eine der N_{GWactive} aktiven Hauptbodenstationen bestimmt ist, die unverfügbar geworden ist, zu einer der N_{GWactive} Hauptbodenstationen umfasst, darunter eine unter den N_{GW}-N_{GWactive} anfangs nicht aktivierten Bodenstationen ausgewählte neu aktivierte, wobei die Nutzlast **dadurch gekennzeichnet ist, dass** sie Mittel (416, 516) zum Verstärken des umgelenkten Signals umfasst, wobei der Arbeitsgang der Umlenkung dem Arbeitsgang der Verstärkung vorgelagert ausgeführt wird.

2. Nutzlast (400) nach dem vorhergehenden Anspruch, **dadurch gekennzeichnet, dass** sie Verstärkungsmittel (416) umfasst, die N_{TWTA} Verstärkungsleitungen umfassen, die dazu geeignet sind, N_{TWTA} Signale zu verstärken, wobei jede Leitung einen Eingang und einen Ausgang aufweist, wobei N_{TWTA} eine ganze Zahl ist sowie 2N_{GWactive} strikt kleiner ist als N_{TWTA}, wobei 2N_{GWactive} Leitungen Sollverstärkungsleitungen bilden und N_{TWTA}-2N_{GWactive} Leitungen Reserveverstärkungsleitungen bilden.

3. Nutzlast (400) nach dem vorhergehenden Anspruch, **dadurch gekennzeichnet, dass** die Verstärkungsmittel (416) wie folgt gebildet sind:
- entweder durch N_{TWTA} Verstärkungseinheiten, die N_{TWTA} Wanderfeldröhrenverstärker (417) oder N_{TWTA} Halbleiterleistungsverstärker umfassen, wobei jede Verstärkungseinheit dazu geeignet ist, ein Signal zu verstärken;
- oder durch eine Mehrtor-Verstärkungsvorrichtung MPA, die N_{TWTA} Eingänge und N_{TWTA} Ausgänge umfasst und dazu geeignet ist, N_{TWTA} Signale zu verstärken.

4. Nutzlast (400) nach einem der Ansprüche 2 bis 3, **dadurch gekennzeichnet, dass** 2N_{GW} kleiner oder gleich N_{TWTA} ist, wobei die Nutzlast Folgendes umfasst:
- erste Mittel (401) zum selektiven Verbinden von 2N_{GWactive} unter N_{TWTA} Ausgängen ausgewählten Ausgängen mit 2N_{GWactive} Eingängen, die dazu geeignet sind, 2N_{GWactive} Signale zu empfangen, wobei die 2N_{GWactive} Signale N_{GWactive} Signale, die für eine erste Polarisation bestimmt sind, und N_{GWactive} Signale umfassen, die für eine zweite Polarisation bestimmt sind, die umgekehrt zur ersten Polarisation ist, wobei die N_{TWTA} Ausgänge mit den N_{TWTA} Eingängen der N_{TWTA} Verstärkungsleitungen verbunden sind;
- zweite Mittel (402) zum selektiven Verbinden von 2N_{GW} unter N_{TWTA} Eingängen ausgewählten Eingängen mit 2N_{GW} Ausgängen, wobei die N_{TWTA} Eingänge mit den N_{TWTA} Ausgängen der N_{TWTA} Verstärkungsleitungen verbunden sind.

5. Nutzlast (500) nach einem der Ansprüche 1 bis 3, **dadurch gekennzeichnet, dass** sie Folgendes umfasst:
- Verstärkungsmittel (516), die N₂ Verstärkungsleitungen umfassen, die dazu geeignet sind, N₂ Signale zu verstärken, wobei jede Leitung einen Eingang und einen Ausgang aufweist, wobei N₁ Leitungen Sollverstärkungsleitungen bilden und N₂-N₁ Leitungen Reserveverstärkungsleitungen bilden, wobei N₂ und N₁ ganze Zahlen sind sowie die ganze Zahl N₁ strikt kleiner ist als N₂, wobei die ganze Zahl N₁ entweder gleich 2N_{GWactive} oder gleich N_{GWactive} ist;
- erste Mittel (501) zum selektiven Verbinden von N₁ unter N₂ Ausgängen ausgewählten Ausgängen mit N₁ Eingängen, die dazu geeignet sind, N₁ Signale zu empfangen, wobei die N₂ Ausgänge mit den N₂ Eingängen der N₂ Verstärkungsleitungen verbunden sind;
- zweite Mittel (502) zum selektiven Verbinden von N₃ unter N₂ Eingängen ausgewählten Eingängen mit N₃ Ausgängen, wobei die Zahl N₃ entweder gleich N_{GW} oder gleich 2N_{GW} ist, wobei N₃ kleiner oder gleich N₂ ist, wobei die N₂ Eingänge mit den N₂ Ausgängen der N₂ Verstärkungsleitungen verbunden sind.

6. Nutzlast nach einem der Ansprüche 4 bis 5, **dadurch gekennzeichnet, dass** die Mittel (401, 402, 501, 502) zur selektiven Verbindung durch mehrere Schalter des Typs R gebildet sind.

7. Verfahren zur Rekonfiguration eines Netzes bei Unverfügbarkeit einer der N_{G}wactive aktiven Hauptbodenstationen, wobei das Verfahren eine Nutzlast (400, 500) nach einem der Ansprüche 4 bis 6 verwendet, wobei das Verfahren die folgenden Schritte umfasst:
- Aktivierung einer unter den N_{GW}-N_{GWactive} nicht aktivierten Bodenstationen ausgewählten Bodenstation, wobei die ausgewählte Bodenstation mindestens ein Signal empfängt, das von einem Ausgang der zweiten Mittel (402, 502) stammt, wobei der Ausgang über die zweiten Mittel (402, 502) mit einem Ausgang einer der N_{TWTA} oder N₂ Verstärkungsleitungen verbunden ist, die Rekonfigurationsleitung genannt wird, wobei das Netz daher eine Gruppe von N_{GWactive} Hauptbodenstationen, darunter eine neu unter den N_{GW}-N_{GWactive} nicht aktivierten Bodenstationen ausgewählte, umfasst;
- Steuerung der ersten Mittel (401, 501) zum Verbinden des Eingangs der Rekonfigurationsleitung mit einem Eingang, der zum Empfangen der Signale geeignet ist, die für eine der Hauptbodenstationen unter der Gruppe von N_{GWactive} Hauptbodenstationen, darunter eine neu aktivierte, bestimmt ist.

8. Satellit, der eine Rückkanal-Nutzlast nach einem der Ansprüche 1 bis 6 und eine Vorwärtskanal-Nutzlast umfasst, die Folgendes umfasst:
- mehrere rauscharme Verstärker, die dazu geeignet sind, die durch die aktiven Hauptbodenstationen gesendeten Signale zu verstärken;
- Mittel zum Umlenken der durch die Bodenstation gesendeten Signale, die den Verkehr der unverfügbar gewordenen Bodenstation zum rauscharmen Verstärker gewährleistet, der dazu bestimmt ist, die durch die unverfügbar gewordene Bodenstation gesendeten Signale zu verstärken.
